# EUROPÄISCHE PATENTSCHRIFT

(11) **EP 2 024 650 B1**
(45) Veröffentlichungstag und Bekanntmachung des Hinweises auf die Patenterteilung: **10.06.2020**
(21) Anmeldenummer: 07724223.8
(22) Anmeldetag: 13.04.2007
(51) Int. Cl.: F15B 21/04, B01D 29/11

(54) **FLUIDSYSTEM**
FLUID SYSTEM
SYSTÈME DE FLUIDE

(30) Priorität: 03.06.2006 DE 102006026077
(43) Veröffentlichungstag der Anmeldung: 18.02.2009
(73) Patentinhaber: Hydac Process Technology GmbH, 66538 Neunkirchen (DE)
(72) Erfinder: WNUK, Ralf, 66450 Bexbach/Kleinottweiler (DE); OLSCHOK, Markus, 66450 Neunkirchen (DE); SAUER, Jürgen, 66539 Neunkirchen (DE)
(74) Vertreter: Bartels und Partner, Patentanwälte
(86) Internationale Anmeldenummer: PCT/EP2007/003283
(87) Internationale Veröffentlichungsnummer: WO 2007/140840

(56) Entgegenhaltungen:
- WO-A-01/89659
- WO-A-2005/072845
- DE-A1- 10 353 888
- DE-A1- 19 734 588
- DE-A1- 19 934 574

## Beschreibung

Die Erfindung betrifft ein Fluidsystem für einen Pumpenkreis, insbesondere hydraulischen Hochdruck-Pumpenkreis, mit einem Funktionsblock, indessen Gehäuse fluidführende Wege verlaufen und an die zumindest teilweise Ventilkomponenten anschließbar sind, wobei eine Filtereinrichtung mit ihrem Filtergehäuse derart mit dem Funktionsblock verbindbar ist, dass zumindest ein Filterelement in den Einbauraum des Funktionsblockes zumindest teilweise aufgenommen ist, wobei innerhalb des Gehäuses des Funktionsblockes die fluidführenden Wege derart intern zueinander verschaltet sind, dass eine Art Matrixaufbau aus Quer- und Längsreihen von fluidführenden Leitungen entsteht, mit im Funktionsblock integrierten Platzhaltern zum Einbau der jeweiligen Ventilkomponente.

Durch die DE 199 34 574 C2 ist ein Fluidsystem bekannt, mit Strömungswegen für Gase und/oder Flüssigkeiten, mit prismatischen Funktions- sowie Baueinheiten, die als fluidführende Wege Strömungskanäle und in den Stirnflächen Anschlußöffnungen für benachbarte Funktions- und Baueinheiten aufweisen. Zusätzlich kann eine Montageplatte vorgesehen sein, für die Festlegung der genannten Funktions- und Baueinheiten. Die genannten Einheiten haben eine Grundfläche, die aus einem Quadrat mit einer Standardkantenlänge besteht oder aus mehreren solchen Quadraten zusammengesetzt ist. Zum Aufbau eines modularen Baukastensystems bestehend aus den blockartigen Funktions- und Baueinheiten sowie den Ventilkomponenten, weisen die Einheiten an ihrer Grundfläche und die Montageplatte in einem entsprechenden Raster für die vorgebbaren Befestigungsmöglichkeiten Bohrungen auf, wobei die Baueinheiten in der jeweiligen Befestigungslage mit ihren Seitenflächen aneinander anliegen und die Anschlußöffnungen sind im jeweiligen Ventilblock als Einheit von ringförmigen Vertiefungen umschlossen, in denen jeweils mindestens ein Dichtungsring angeordnet ist, der abdichtend an der Wandung der Vertiefung anliegt.

Mit dem bekannten Fluidsystem ist eine Art Baukastensystem geschaffen, mit dem sich eine Vielzahl an fluidischen Aufgaben lösen lassen, bei denen man zum Ansteuern von fluidführenden Wegen Ventilkomponenten einsetzt, wie Wegeventile, Druckbegrenzungsventile, Drosseln etc.; es besteht aber auch die Möglichkeit, Sensoren und sonstige Anzeigegeräte wie beispielsweise Manometer oder dergleichen anzuschließen.

Soll der bekannte Funktionsblock aber mit weiteren Fluidkomponenten zusammenwirken, wie beispielsweise hydraulischen Pumpen, Kühlern, Wärmetauschern, Filtereinheiten etc. sind die dahingehenden zusätzlichen Komponenten separat über eine zusätzliche Verrohrung an den bekannten Funktionsblock anzuschließen, was zum einen zu konstruktiv groß aufbauenden Lösungen führt und zum andern kommt es aufgrund der relativ langen Fluid-Transportwege zu einem thermisch inkonsistenten Verhalten, was sich nachteilig auf den Wirkungsgrad dahingehender Fluidsysteme auswirken kann.

Ein als Rückspülfilter konzipiertes Fluidsystem ist aus DE 197 34 588 A1 bekannt. Der bekannte Rückspülfilter weist im Inneren seines Filtergehäuses eine Gruppe von Filtereinheiten mit Filtereinsätzen auf, die im gemeinsamen Filtergehäuse mittels eines Stellantriebs auf einer Umlaufbahn bewegbar sind, die auf mindestens einem Teilabschnitt ihrer Länge eine Rückspülzone für die Rückspülung des jeweils in dieser Rückspülzone befindlichen Filtereinsatzes bilden. Dabei sind sämtliche Filtereinsätze in Filterkammern eines Drehkörpers angeordnet, der im Filtergehäuse um seine Achse drehbar gelagert ist, so dass die Filterkammern mit den darin befindlichen Filtereinsätzen auf der Umlaufbahn des Drehkörpers in eine Rückspülzone gelangen, in der sie rückgespült werden können. Eine Rückspülvorrichtung ist außenseitig am Filtergehäuse lösbar und auswechselbar angebaut und an der Außenseite des Filtergehäuses gut zugänglich. Mit der mit Spül- und Schlammablassventil versehenen Rückspülvorrichtung sind die Filtereinsätze einzeln oder gruppenweise in einer vom Filterkreislauf der anderen, im Filterbetrieb stehenden Filtereinsätze abgetrennten Rückspülkammer mit einem Spülmedium spülbar. Der bekannte Rückspülfilter kann sowohl durch Handbetätigung als auch im vollautomatischen Betrieb arbeiten.

Ein weiteres Fluidsystem, ebenfalls in Form eines Rückspülfilters, ist aus WO 01/89659 A1 bekannt. Dieser Rückspülfilter weist im Filtergehäuse um eine Drehwelle angeordnete, an beiden Enden offene Filterkerzen, deren Innenraum im Filterbetrieb mit einer in den Rückspülfilter einströmenden Unfiltratmenge beaufschlagbar ist, und eine mittels der Drehwelle bewegte Reinigungseinrichtung auf, die für die Einzel- oder Gruppenreinigung der Filterkerzen im Rückspülbetrieb wenigstens zwei über die Drehwelle mit einem Ablassventil in Verbindung stehende Spülküken aufweist. Ein erstes Spülküken ist der einen Filterkerzenendseite und ein anderes Spülküken der anderen Filterkerzenendseite zugeordnet. An den Filterkerzenendseiten sind Kammern aufweisende Umlenkhauben angeordnet, wobei die Einströmenden mehrerer Filterkerzen an eine Kammer anschließbar sind. Mit der Reinigungseinrichtung sind die Filterkerzen periodisch wechselseitig und gegensinnig rückspülbar.

Aus der DE 103 53 888 A1 geht ein Fluidsystem für einen Pumpenkreis mit einem Funktionsblock hervor, in dessen Gehäuse fluidführende Wege verlaufen und an die zumindest teilweise Ventilkomponenten anschließbar sind, wobei eine Filtereinrichtung mit ihrem Filtergehäuse derart mit dem Funktionsblock verbindbar ist, dass eine Filterpatrone vollständig in den Einbauraum des Funktionsblockes aufgenommen ist, wobei innerhalb des Gehäuses des Funktionsblockes die fluidführenden Wege derart intern zueinander verschaltet sind, dass eine Art Matrixaufbau aus Quer- und Längsreihen von fluidführenden Leitungen entsteht, mit im Funktionsblock integriertem Platzhalter zum Einbau der jeweiligen Ventilkomponente.

Ausgehend von diesem Stand der Technik liegt der Erfindung die Aufgabe zugrunde, das bekannte Fluidsystem dahingehend weiter zu verbessern, dass bezogen auf den Einsatz von Filterelementen als zusätzliche Fluidkomponente weniger Einbauraum benötigt wird und dass insbesondere bei Auftreten unterschiedlichster Betriebstemperaturbereiche ein verbesserter Wirkungsgrad erhalten ist. Eine dahingehende Aufgabe löst ein Fluidsystem mit den Merkmalen des Patentanspruches 1 in seiner Gesamtheit.

Erfindungsgemäß ist die Filtereinrichtung für den Einsatz von mehreren Filterelementen vorgesehen, die für eine Filtration oder Rückspülung in beiden Richtungen durchströmbar sind, dass die einen Filterelemente in einer Filtrationsstellung die Filtration vornehmen und zumindest ein anderes weiteres Filterelement zum Abreinigen seiner wirksamen Filterfläche in einer Rückspülstellung rückspülbar ist, dass die den Filtereinlaß und den Filterauslaß bildenden fluidführenden Wege im Funktionsblock integriert sind, dass mittels einer Schwenkeinrichtung das jeweilige Filterelement von seiner Filtrationsstellung in die Rückspülstellung und wieder in die Filtrationsstellung bringbar ist, und dass die Schwenkeinrichtung ein Aufnahmeteil für die Aufnahme der Filterelemente aufweist, das mittels eines Antriebes um eine Schwenkachse drehbar innerhalb des Filtergehäuses angeordnet ist.

Dergestalt ist ein automatischer Betrieb für das Fluidsystem möglich, wobei über eine automatische Verschmutzungskontrolle ein Rückspülvorgang durchführbar ist, unter Einsatz einer Schwenkeinrichtung mit Motor, bei der die jeweiligen Filterelemente hintereinander in ihre Filter- oder Rückspülstellung schwenkbar sind.

Dabei sind innerhalb des Gehäuses des Funktionsblockes die fluidführenden Wege, insbesondere die Wege mit ihren Nebenzweigleitungen derart intern zueinander verschaltet, dass eine Art Matrixaufbau aus Quer- und Längsreihen von fluidführenden Leitungen entsteht, mit im Funktionsblock integrierten Platzhaltern zum Einbau der jeweiligen Ventilkomponente. Durch die dahingehende Platzhalter-Lösung nebst dem matrixartigen Verbindungsaufbau über die jeweiligen Verbindungsleitungen ist es ermöglicht, eine ausgesprochene Vielzahl von Systemaufgaben zu bewältigen, in dem man in Abhängigkeit von der gewünschten Funktion an die Platzhalter eben auch andere Ventilkomponenten setzen kann. Ein einmal im Einsatz befindliches Grundsystem kann auch in der Art eines hydraulischen Baukastens vor Ort leicht umgebaut werden, in dem eben andere Ventilkomponenten an die Stelle der bisher eingesetzten Ventilkomponenten treten. Insbesondere lässt sich dergestalt beim Auftreten größerer Fluidmengen und - drücke eine Anpassung des Systems vor Ort erreichen. Als Ventilkomponenten für die Platzhalter können dann neben üblichen Schalt- und Wegeventilen auch Druckbegrenzungsventile, Rückschlagventile oder sonstige ansteuerbare Schaltventile zur Anwendung gebracht werden. Der derart aufgebaute Funktionsblock lässt sich auch insoweit in andere hydraulische Funktionssysteme integrieren, beispielsweise in die Tankeinheit eines nicht näher dargestellten mobilen Hydrauliksystems.

Dadurch, dass eine Filtereinrichtung mit ihrem Filtergehäuse derart mit dem Funktionsblock verbindbar ist, dass zumindest ein Filterelement in den Einbauraum des Funktionsblockes aufgenommen ist, ist die Filtereinrichtung zumindest teilweise integrierter Bestandteil des Funktionsblockes des Fluidsystems. Dies führt zu einem konstruktiv klein aufbauenden Fluidsystem, bei dem dessen Einzelkomponenten kompakt im Bereich des Funktionsblockes mit den Ventilkomponenten zusammengefasst sind. Da bezogen auf den Funktionsblock darüber hinaus eine zusätzliche Verrohrung zum Anschluß des jeweiligen Filterelementes entfallen kann, ist von den thermischen Betriebsbedingungen her eine ausgewogene Betriebssituation für das erfindungsgemäße Fluidsystem erreicht, wozu die relativ stark ausgebildeten Wandungsteile des Funktionsblockes mit dazu beitragen können. Da darüber hinaus die möglichen Umlenkwege für das Fluid verkürzt sind, ist auch insoweit der Wirkungsgrad für das erfindungsgemäße Fluidsystem verbessert.

Das erfindungsgemäße Fluidsystem mit seinen wesentlichen Komponenten, Funktionsblock mit Ventilkomponenten und eingesetzter Filtereinrichtung, hat sich besonders bewährt, bei der Verwendung in sogenannten Hochdruck-Pumpenkreisen, bei denen eine Hochdruckpumpe an den Fluidausgang des Fluidsystems gekoppelt ist, wobei das Fluidsystem dann sicherstellt, dass nur hoch abgereinigtes Fluid für den Weitertransport der Hochdruckpumpe zur Verfügung gestellt wird, um dergestalt einen reibungslosen Pumpenvorgang für den hydraulischen Kreis zu gewährleisten. Es hat sich gezeigt, dass ansonsten bereits kleinste Verschmutzungen genügen können, um insbesondere bei speziell ausgestalteten Hochdruckpumpen deren Funktion zu gefährden.

Im Folgenden wird das erfindungsgemäße Fluidsystem anhand eines Ausführungsbeispieles nach der Zeichnung näher erläutert. Dabei zeigen in prinzipieller und nicht maßstäblicher Darstellung die
- Fig. 1: in der Art eines hydraulischen Schaltplanes die Anwendung des erfindungsgemäßen Fluidsystems für einen sogenannten hydraulischen Hochdruck-Pumpenkreis,
- Fig. 2: in perspektivischer Draufsicht das Fluidsystem ohne angeschlossene Hochdruckpumpe, und
- Fig. 3: einen Längsschnitt durch das Fluidsystem nach der Fig. 2.

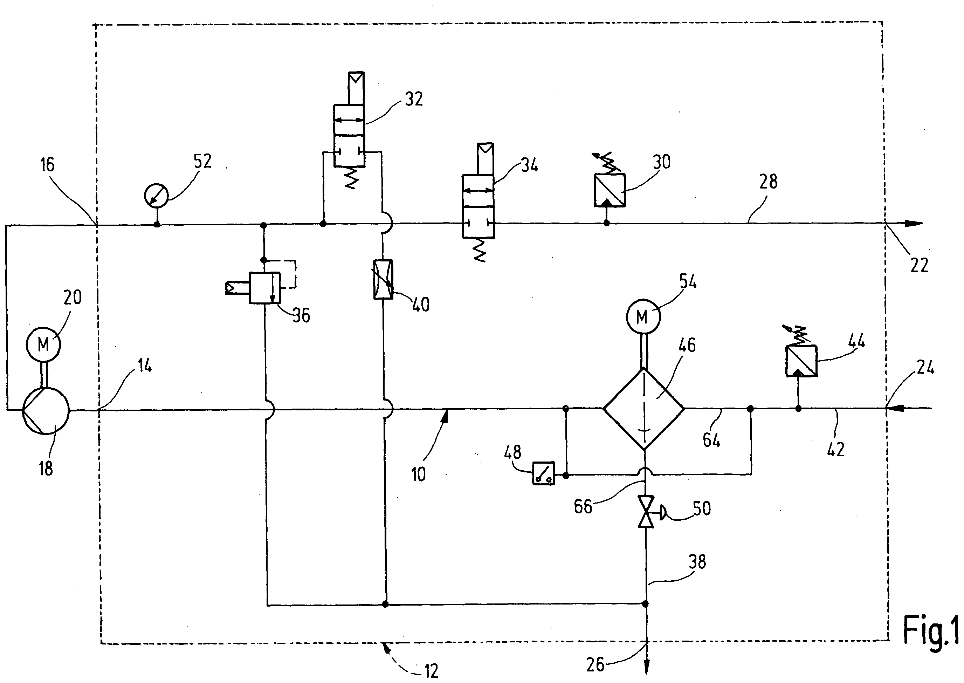

Die Fig.1 zeigt beispielhaft ein Fluidsystem für einen Pumpenkreis 10, insbesondere in Form eines hydraulischen Hochdruck-Pumpenkreises. Der dahingehende Pumpenkreis 10 weist einen als Ganzes mit 12 bezeichneten Funktionsblock auf, der in der hydraulischen Schaltdarstellung nach der Fig. 1 mit einem strichpunktierten Rahmen symbolhaft wiedergegeben ist. Der genannte Funktionsblock 12 weist Anschlußstellen in Form eines Pumpeneinganges 14 sowie eines Pumpenausganges 16 auf. Die Hochdruckpumpe 18, die dergestalt an die Anschlußstellen angeschlossen ist, ist mit ihrem Antriebsmotor 20 gezeigt und im übrigen in der Art einer Saugpumpe ausgestaltet. Ferner weist der Funktionsblock 12 einen Fluidausgang 22 auf, an den eine nicht näher dargestellte Hydraulikmedium benötigende Arbeitsmaschine angeschlossen ist, die wiederum mit ihrem Fluidausgang an den Fluideingang 24 des Blockes 12 angeschlossen ist. Ferner ist ein Abfuhranschluß 26 vorhanden, der beispielsweise zum nicht näher dargestellten Späneförderer der genannten Arbeitsmaschine führen kann. Die dahingehende Anwendung ist nur beispielhaft und anstelle der Arbeitsmaschine kann auch ein sonstiger hydraulischer Verbraucher treten, beispielsweise in Form eines hydraulischen Getriebes, eines hydraulisch ansteuerbaren Aufzuges, von Hydromotoren eines Gabelstaplers und dergleichen mehr. Auch kann anstelle der Hochdruckpumpe 18 eine Niederdruckpumpe treten oder der Funktionsblock 12 kann in anderem Zusammenhang in einen hydraulischen Kreis geschaltet sein, beispielsweise in einen hydraulischen Wärmetauscher- oder Kühlkreislauf.

Im vorliegenden Fall jedoch ist in den fluidführenden Weg 28 zur Arbeitsmaschine neben einem Hochdruckschalter 30 zwei Hochdruck-2/2-Wegeventile 32, 34 geschaltet, wobei auf der Eingangsseite des Wegeventiles 32 aus Sicherheitsgründen ein Druckbegrenzungsventil 36 angeordnet ist, dessen Ausgang in eine Rückspülleitung 38 mündet. Ausgangsseitig ist das 2/2-Wegeventil 32 über eine einstellbare Drossel 40 gleichfalls an die Rückspülleitung 38 angeschlossen, so dass ein weitgehend druckloser Umlauf über die Drossel 40 für das Fluid möglich ist. Als weiterer fluidführender Weg 42 dient eine entsprechende Fluidleitung, die vom Fluideingang 24 der Arbeitsmaschine zum Pumpeneingang 14 des Funktionsblockes 12 führt. Benachbart zum Fluideingang 24 ist wiederum ein Druckschalter 44 in den Weg 42 diesmal als Niederdruckschalter geschaltet und nachfolgend in Richtung des Einganges 14 folgt eine Filtereinrichtung 46, deren Verschmutzungsgrad über einen elektrischen Differenzdruckschalter 48 detektierbar ist, der in einer Bypassleitung des Weges 42 zu der Filtereinrichtung 46 sitzt. Sofern in einer bevorzugten Ausführungsform die Filtereinrichtung 46 als Rückspülfiltereinrichtung konzipiert ist, wie im vorliegenden Fall, ist an die Filtereinrichtung 46 die Rückspülleitung 38 angeschlossen, die über ein Rückspülventil 50 absperrbar ist. Ferner kann über Sensoren, wie beispielsweise einen Manometer 52, Systemwerte des Fluidkreises abgerufen werden, wie beispielsweise der Fluiddruck.

Über die genannten 2/2-Wegeventile 32, 34 lässt sich die Maschinenversorgung mit Fluid vorgeben und im gezeigten abgesperrten Zustand der Ventile 32, 34 fördert die Hochdruckpumpe 18 über die Drossel 40 die Fluidmenge zurück, an den Abfuhranschluß 26 des Funktionsblockes 12. Dergestalt lässt sich die Hochdruckpumpe 18 als Konstantpumpe mit permanenter Förderleistung ausgestalten und bei entsprechendem Bedarf an der nicht näher dargestellten Arbeitsmaschine werden die genannten Wegeventile 32, 34 in diskreten vorgebbaren Zeitabständen geöffnet. Dergestalt besteht auch die Möglichkeit, konstant einen Filtrationsbetrieb sicherzustellen, in dem vom Fluideingang 24 kommendes Fluid mittels der Filtereinrichtung 46 gefiltert und über die Pumpe 18 gefördert in den hydraulischen Kreis über den Abfuhranschluß 26 aus dem Funktionsblock 12 wieder abgegeben wird. Sofern die Filtereinrichtung 46 als Rückspülfilter ausgebildet ist, lässt sich ein dahingehender Rückspülvorgang manuell auslösen; vorzugsweise ist jedoch an einen automatischen Rückspülbetrieb gedacht, unter Einsatz einer Schwenkeinrichtung für die einzelnen Filterelemente, die mittels eines Motors 54 ansteuerbar ist, was im Folgenden noch näher aufgezeigt wird. Die Filtereinrichtung 46 könnte jedoch im einfachsten Ausbaufall nur ein einzelnes Filterelement aufweisen, das im verschmutzten Zustand dann gegen ein Neufilterelement austauschbar wäre.

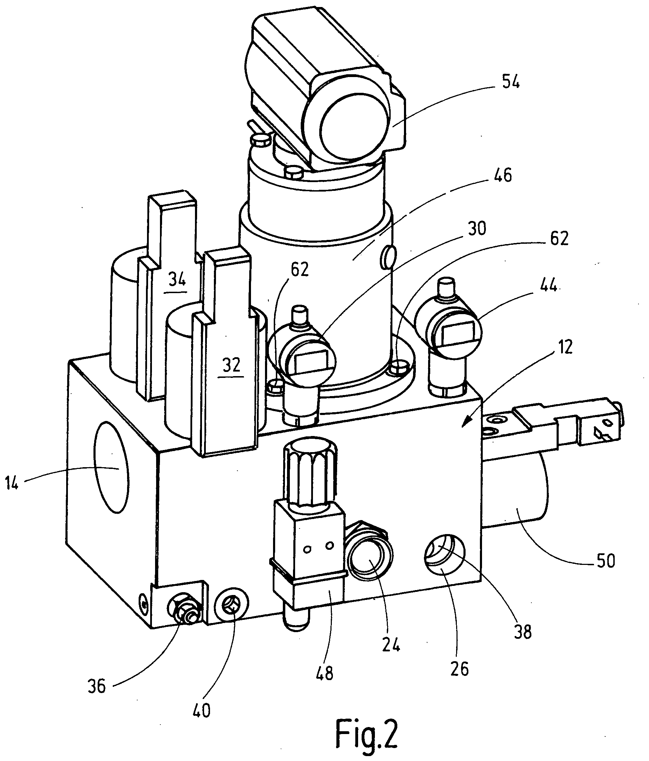

Die Fig. 2 zeigt den Funktionsblock 12 in einer perspektivischen Seitenansicht und sofern ersichtlich, werden die in Fig. 1 benannten Komponenten in ihrer konstruktiven Ausgestaltung in der Fig. 2 wiedergegeben. Wie die Darstellung nach der Fig. 2 zeigt, baut der gesamte Funktionsblock 12 mit integrierter Filtereinrichtung 46 konstruktiv in Form eines Quaders klein auf und alle Elemente des Pumpenkreises 10 gemäß der Darstellung nach der Fig. 1 sind in sinnfälliger Weise in dem Funktionsblock 12 platzsparend integrierbar.

Erfindungsgemäß sind innerhalb des Gehäuses des Funktionsblockes 12 die fluidführenden Wege, insbesondere die Wege 28 und 42 mit ihren Nebenzweigleitungen derart intern zueinander verschaltet, dass eine Art Matrixaufbau aus Quer- und Längsreihen an fluidführenden Leitungen entsteht, mit im Funktionsblock 12 integrierten Platzhaltern zum Einbau der jeweiligen bereits angesprochenen Ventilkomponente. Durch die dahingehende Platzhalter-Lösung nebst dem matrixartigen Verbindungsaufbau über die jeweiligen Verbindungsleitungen ist es ermöglicht, eine ausgesprochene Vielzahl an Systemaufgaben zu bewältigen, in dem man in Abhängigkeit von der gewünschten Funktion an die Platzhalter eben auch andere Ventilkomponenten setzen kann. Ein einmal im Einsatz befindliches Grundsystem kann auch in der Art eines hydraulischen Baukastens vor Ort leicht umgebaut werden, in dem eben andere Ventilkomponenten an die Stelle der bisher eingesetzten Ventilkomponenten treten. Insbesondere lässt sich dergestalt beim Auftreten größerer Fluidmengen und -drücke eine Anpassung des Systems vor Ort erreichen. Als Ventilkomponenten für die Platzhalter können dann neben üblichen Schalt- und Wegeventilen auch Druckbegrenzungsventile, Rückschlagventile oder sonstige ansteuerbare Schaltventile zur Anwendung gebracht werden. Der derart aufgebaute Funktionsblock 12 lässt sich auch insoweit in andere hydraulische Funktionssysteme integrieren, beispielsweise in die Tankeinheit eines nicht näher dargestellten mobilen Hydrauliksystems.

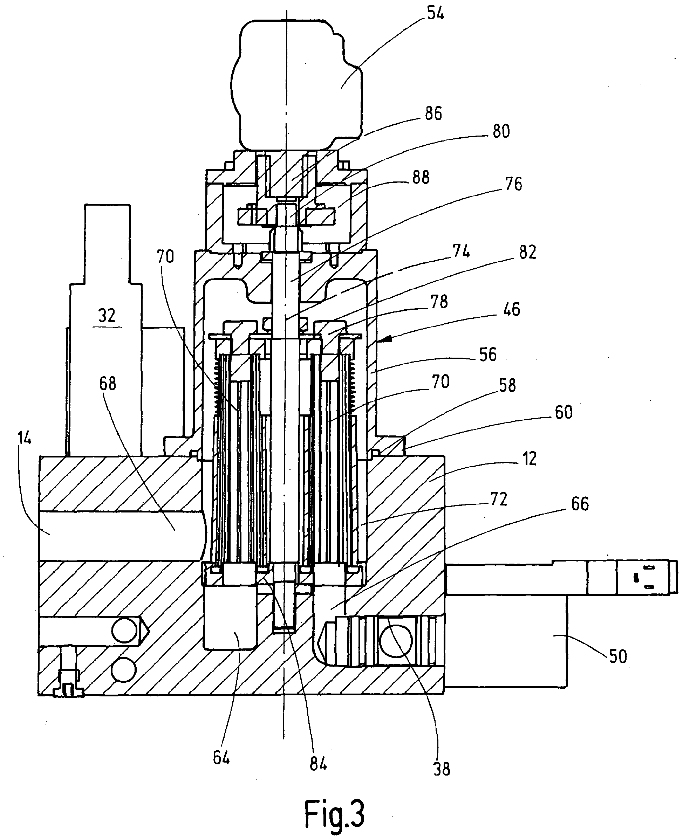

Die in der Fig. 3 gezeigte Filtereinrichtung 46 ist in der Art einer Rückspülfiltereinrichtung aufgebaut und weist ein zylindrisches Gehäuseteil 56 als Filtergehäuse auf. Das dahingehende Filter-Gehäuseteil 56 ist in Blickrichtung auf die Fig. 3 gesehen, auf die Oberseite des Funktionsblockes 12 aufgesetzt und greift über einen stufenförmigen Absatz 58 in das entsprechende Gehäuseteil des Funktionsblockes 12 ein. Nach außen hin verbreitert sich das Gehäuseteil 56 über das Flanschstück 60, das insoweit an seiner Unterseite einen Aufnahmekanal für eine nicht näher dargestellte Ringdichtung aufweist, mit der das Innere des Gehäuseteiles 56 gegenüber der Umgebung abdichtbar ist. Über entsprechende Verbindungsschrauben 62 (vgl. Fig. 2) ist dergestalt das Gehäuseteil 56 mit dem Gehäuse des Funktionsblockes 12 lösbar verbunden. Für die Fluidversorgung der Filtereinrichtung 46 weist das Gehäuse des Funktionsblockes 12 einen Fluidkanal 64 auf, der zu dem Fluideingang 24 führt, sowie einen weiteren Fluidkanal 66 der in die Rückspülleitung 38 mündet mit dem Rückspülventil 50, das in der Art einer Einschraubpatrone ausgebildet, gemäß der Darstellung nach der Fig. 3, in den Funktionsblock 12 eingesetzt ist. Des weiteren ist auf der linken Bildhälfte der Fig. 3 der Pumpeneingang 14 des Funktionsblockes 12 dargestellt, der über eine Fluidverbindung 68 in das Innere des Funktionsblockes 12 sowie in das Innere des Gehäuseteiles 56 der Filtereinrichtung 46 mündet.

In die Filtereinrichtung 46 sind nach obenhin konisch zulaufende Filterelemente 70 eingesetzt, wobei an die Stelle der konischen Filterelemente 70 auch zumindest teilweise zylindrische Filterelemente (nicht dargestellt) treten können. Die angesprochenen konischen Filterelemente 70, die vorzugsweise aus sogenannten Spaltsiebrohr-Filterelementen bestehen, sind in Abständen voneinander entlang eines zylindrischen Kreisbogens innerhalb des Filter-Gehäuseteiles 56 sowie innerhalb des zuordenbaren Gehäuseteils des Funktionsblockes 12 angeordnet. Für die Aufnahme der einzelnen Filterelemente 70, ist der Funktionsblock 12 mit einer topfartigen Ausnehmung 72 versehen, deren Begrenzungswand bündig mit der Innenwand des Gehäuseteiles 56 abschließt.

Die Anordnung nach der Fig. 3 mit den Filterelementen 70 ist derart gewählt, um eine Rückspülung vornehmen zu können; bei einfach aufgebauten Funktionsblöcken besteht aber auch die Möglichkeit, nur ein einzelnes Filterelement dergestalt in dem Funktionsblock 12 zu integrieren, dass es in seiner axialen Länge betrachtet in etwa zur Hälfte im Funktionsblock 12 aufgenommen ist, insbesondere in der topfartigen Ausnehmung 72 und die andere Hälfte von der Unterseite her in das Innere des Gehäuseteiles 56 hineinragt. Auf diese Art und Weise lässt sich in sehr kompakter Weise die Filtereinrichtung 46 teilweise mit ihren Funktionselementen im Funktionsblock 12 integrieren und im übrigen sind dergestalt die Filterelemente 70 auch vor mechanischen Beschädigungen mittels der Wandteile des Funktionsblockes 12 gesichert. Da der Funktionsblock 12 im Bereich der Aufnahme der Filterelemente 70 mit einer relativ starken Wandstärke versehen ist, ist insoweit wärmetechnisch auch eine sichere Kammerung der wirksamen Filterelemente 70 erreicht, was zu einer Verringerung der Verlustleistung bei der Filtration führt, insbesondere wenn von der Einsatztemperatur her das zu filtrierende Medium sehr unterschiedlich ausfallen sollte.

Bei der gewählten Anordnung nach der Fig. 3 sind neben den beiden gezeigten Filterelementen 70 in Blickrichtung gesehen und in radial gleichen Abständen zu den genannten beiden Filterelementen 70 ein weiteres Paar an Filterelementen 70 vorgesehen, die einmal aus der Bildebene herausragt und einmal in der dahinter liegenden Bildebene liegt. Insgesamt sind also vier einander diametral zur Längsachse 74 der Filtereinrichtung 46 angeordnete Filterelemente 70 vorgesehen, die paarweise einander gegenüberliegend zur Längsachse 74 angeordnet sind. Andere Konfigurationen sind hier denkbar. In Blickrichtung auf die Fig. 3 gesehen befindet sich das rechte Filterelement 70 über dem weiteren Fluidkanal 66 und wird insoweit mittels des im Gehäuseteil 56 befindlichen Filtrats rückgespült. Dabei durchdringt das Filtrat von außen nach innen das rückzuspülende Filterelement 70 und über die Rückspülmenge abgereinigte Verunreinigungen gelangen über den weiteren Fluidkanal 66 sowie das dann geöffnete Rückspülventil 50 zum Abfuhranschluß 26 des Funktionsblockes 12, beispielsweise kann dann dergestalt die verunreinigte Rückspülmenge einem nicht näher dargestellten Späneförderer eine Arbeitsmaschine zugeführt werden.

Die sonstigen drei Filterelemente 70 sind ringförmig mit ihrer jeweiligen Unterseite an den Fluidkanal 64 angeschlossen, über den das Unfiltrat von der Arbeitsmaschine über den Fluideingang 24 kommend der Filtereinrichtung 46 zugeführt wird. Mithin erfolgt die Filtration über die einzelnen Filterelemente 70 von innen nach außen und das Filtrat gelangt über die Fluidverbindung 68 zu der nicht näher dargestellten Hochdruckpumpe 18 nach der Fig. 1. Da die dahingehende Hochdruckpumpe 18 sehr hohe Saugleistungen realisieren kann, ist erfindungsgemäß dafür Sorge getragen, dass die Fluidverbindung 68 im unteren Fußbereich der konischen Filterelemente 70 ausläuft, so dass diese einen entsprechenden Widerstand gegenüber der starken Fluidströmung entgegensetzen können. Auch findet im Bereich der verbreiterten Fußabstützung für die einzelnen Filterelemente 70 in besonders hohem Maße die wirksame Filtration statt, was sich wiederum günstig für den gesamtenergetischen Betrieb des Fluidsystems auswirkt.

Mittels einer Schwenkeinrichtung 76 ist es möglich, die einzelnen Filterelemente 70 nacheinander von ihrer Filtrationsstellung in die Rückspülstellung und wieder in die Filtrationsstellung zu bringen, wobei die Umlaufbewegung für die einzelnen Filterelemente 70 sowohl im Uhrzeigersinn als auch im Gegenuhrzeigersinn erfolgen kann. Die Schwenkeinrichtung 76 selbst weist ein Aufnahmeteil 78 auf, für die endseitige Aufnahme der einzelnen Filterelemente 70, wobei das Aufnahmeteil 78 mittels des Motors 54 um eine Schwenkachse 80 drehbar innerhalb des Filtergehäuses 56 angeordnet ist. Die dahingehende Schwenkachse 80 ist im wesentlichen deckungsgleich mit der Längsachse 74 der Filtereinrichtung 46.

Das Aufnahmeteil 78 weist zwei gegenüberliegende Endteile 82, 84 auf, zwischen denen sich die einzelnen Filterelemente 70 erstrecken, wobei das untere Endteil 84 Durchlässe für den Fluidtransport aufweist und das obere Endteil 82 ist insoweit nach außen hin also in das Innere des Gehäuseteiles 56 fluiddicht abgeschlossen. Nimmt man das Gehäuseteil 56 von dem Funktionsblock 12 ab, kann man über das obere Endteil 82 insoweit auch die Filterelemente 70 für einen Austausch gegen Neuelemente aus dem Funktionsblock 12 herausheben.

Der Motor 54 der Filtereinrichtung 46 kann ein Elektromotor sein; vorzugsweise ist er jedoch in der Art eines Pneumatikmotors ausgebildet. Ein dahingehender Pneumatik-Motor ist dadurch charakterisiert, dass sein zapfenartiges Abtriebsteil in Abhängigkeit von der Pumpbewegung der Kolbenteile des Pneumatik-Motors eine alternierende Hin- und Herbewegung durchführt, wobei die dahingehende Hin- und Herbewegung dann mittels einer Freilaufeinrichtung 88 in eine konstante Antriebsbewegung in einer Antriebsrichtung für die Schwenkachse 80 der Filtereinrichtung 46 umsetzbar ist. Dahingehende Freilaufeinrichtungen für Pneumatik-Motoren sind an sich bekannt, so dass an dieser Stelle hierauf nicht mehr näher eingegangen wird. Mit dem genannten Antriebskonzept ist es aber möglich, die alternierende Hin- und Herbewegung des Pneumatik-Motors 54 als Antrieb in eine Schwenkbewegung um jeweils 90° für die Filterelemente 70 mittels der Schwenkeinrichtung 76 umzusetzen, um dergestalt in Hintereinanderabfolge immer ein Filterelement 70 in der Rückspülstellung abzureinigen und mit den drei anderen Filterelementen den üblichen Filtrationsbetrieb aufrecht zu erhalten. Der jeweilige Rückspülvorgang für ein Filterelement 70 kann also in quasi - kontinuierlichen Zeitabständen erfolgen; es besteht aber auch die Möglichkeit, über Differenz-Druckmessungen, beispielsweise mittels des elektrischen Differenzdruckschalters 48, an den Filterelementen 70 jeweils selbst festzustellen, wann diese für eine Rückspülung anstehen.

Aufgrund des konischen Aufbaus der einzelnen Filterelemente 70 unter Einbezug der Hohlraumgestaltung für das Gehäuseteil 56 hat sich die dahingehende Anordnung als energetisch besonders günstig im Filtrationsbetrieb erwiesen, da der bei der Durchströmung der Filterelemente 70 im üblichen Filtrationsbetrieb entgegenstehende Widerstand, gebildet durch den Widerstand von Gehäuseteilen des Gehäuses 56, dergestalt deutlich verringert ist. Auch kommt es aufgrund der dahingehenden Ausgestaltung zu einem im wesentlichen laminaren Strömungsverhalten, was den Ausströmwiderstand im üblichen Filtrationsbetrieb reduzieren hilft und sicherstellt, dass unmittelbar die Abnahme der filtrierten Menge an der Fluidverbindung 68 zu der Hochdruckpumpe 18 erfolgen kann.

Die bereits angesprochenen und vorzugsweise zum Einsatz kommenden Spaltsiebrohr-Filterelemente weisen in Richtung der Längsachse 74 der Filtervorrichtung geneigte Stützstäbe auf, um die unter Freilassen von durch ein Fluid passierbaren Spalten ein Drahtprofil in einzelnen Windungen gewickelt ist, wobei im Bereich einer jeden Berührstelle des Drahtprofiles mit dem Stützstab ein Schweißpunkt angeordnet ist. Die für den freien Fluiddurchtritt vorgesehene Spaltgröße, also der Abstand zwischen zwei Spalten, verhindert den Durchtritt von Verschmutzungen sofern die Partikelgröße die dahingehende Spaltweite übersteigt. In den Spalten jedoch festgesetzte Verschmutzungen lassen sich dann über den beschriebenen Rückspülbetrieb aus der Filtervorrichtung sicher entfernen. Das derart abgereinigte Filterelement 70 gelangt dann von der Rückspülstellung zurück in die Filtrationsstellung und kann dort für den weiteren Filtrationseinsatz unmittelbar verwendet werden.

Für eine stabile Lagerung der Filterelemente 70 dient auch die Ausgestaltung, bei der die Schwenkachse 80 endseitig sowohl im Funktionsblock 12 geführt ist, als auch im Bereich der oberen Wandteile des Filtergehäuses 56 der Filtereinrichtung 46. Die beim Pneumatik-Motor 54 auftretenden Vibrationen sind dergestalt sowohl über das Gehäuseteil 56 als auch über die Schwenkachse 80 sicher in die Grundstruktur des Funktionsblockes 12 einleitbar, was den schädigenden Schwingungsanteil reduzieren hilft. Die dichtgepackte Koaxial-Anordnung an Filterelementen 70, bezogen auf die Schwenkachse 80, stellt insoweit auch einen funktionssicheren Betrieb sicher, bei der die Filterelemente 70 als Ganzes in die aufgezeigte Rückspülstellung verfahren werden.

## Patentansprüche

1. Fluidsystem für einen Pumpenkreis (10), insbesondere hydraulischen Hochdruck-Pumpenkreis, mit einem Funktionsblock (12), in dessen Gehäuse fluidführende Wege (28, 42) verlaufen und an die zumindest teilweise Ventilkomponenten (32, 34, 46) anschließbar sind, wobei eine Filtereinrichtung (46) mit ihrem Filtergehäuse (56) derart mit dem Funktionsblock (12) verbindbar ist, dass zumindest ein Filterelement (70) in den Einbauraum (72) des Funktionsblockes zumindest teilweise aufgenommen ist, wobei innerhalb des Gehäuses des Funktionsblockes (12) die fluidführenden Wege (28, 42) derart intern zueinander verschaltet sind, dass eine Art Matrixaufbau aus Quer- und Längsreihen von fluidführenden Leitungen entsteht, mit im Funktionsblock (12) integrierten Platzhaltern zum Einbau der jeweiligen Ventilkomponente (32, 34, 36), **dadurch gekennzeichnet, dass** die Filtereinrichtung (46) für den Einsatz von mehreren Filterelementen (70) vorgesehen ist, die für eine Filtration oder Rückspülung in beiden Richtungen durchströmbar sind, dass die einen Filterelemente (70) in einer Filtrationsstellung die Filtration vornehmen und zumindest ein anderes weiteres Filterelement (70) zum Abreinigen seiner wirksamen Filterfläche in einer Rückspülstellung rückspülbar ist, dass die den Filtereinlaß und den Filterauslaß bildenden fluidführenden Wege (64, 68) im Funktionsblock (12) integriert sind, dass mittels einer Schwenkeinrichtung (76) das jeweilige Filterelement (70) von seiner Filtrationsstellung in die Rückspülstellung und wieder in die Filtrationsstellung bringbar ist, und dass die Schwenkeinrichtung (76) ein Aufnahmeteil (78) für die Aufnahme der Filterelemente (70) aufweist, das mittels eines Antriebes (54) um eine Schwenkachse (80) drehbar innerhalb des Filtergehäuses (56) angeordnet ist.

2. Fluidsystem nach Anspruch 1, **dadurch gekennzeichnet, dass** das Filtergehäuse (56) der Filtereinrichtung (46) auf den Funktionsblock (12) aufgesetzt ist und in etwa die obere Hälfte der Einbaulänge des jeweiligen Filterelementes (70) aufnimmt.

3. Fluidsystem nach Anspruch 1 oder 2, **dadurch gekennzeichnet, dass** der Antrieb (54) mittels einer Freilaufeinrichtung (88) auf die Schwenkachse (80) der Schwenkeinrichtung (76) wirkt, um die koaxial die einzelnen Filterelemente (70) angeordnet sind und die endseitig im Filtergehäuse (56) und im Funktionsblock (12) drehbar geführt ist.

4. Fluidsystem nach Anspruch 3, **dadurch gekennzeichnet, dass** der Antrieb (54) mit seinem Antriebsgehäuse auf das Gehäuse der Freilaufeinrichtung (88) aufgesetzt ist, das wiederum auf dem Filtergehäuse (56) aufgesetzt ist.

5. Fluidsystem nach einem der Ansprüche 1 bis 4, **dadurch gekennzeichnet, dass** das jeweilige Filterelement (70) als konisches Spaltsiebrohr-Filterelement ausgebildet ist.

6. Fluidsystem nach einem der Ansprüche 1 bis 5, **dadurch gekennzeichnet, dass** der Funktionsblock (12) neben Ventilkomponenten wie Wegeventilen (32,34) und Druckbegrenzungsventilen (36), Druckschalter (30,44) sowie mindestens ein Manometer (52) aufweist.

7. Fluidsystem nach einem der Ansprüche 1 bis 6, **dadurch gekennzeichnet, dass** die Hydraulikpumpe, insbesondere Hochdruckpumpe (18), von außen heran den Funktionsblock (12) fluidführend anschließbar ist.

## Claims

1. Fluid system for a pump circuit (10), particularly a hydraulic high-pressure pump circuit, with a function block (12), with fluid-conveying channels (28, 42) running in the housing of said block, to which valve components (32, 34, 46) can at least partially be connected, wherein a filter device (46) with its filter housing (56) can be connected to the function block (12) such that at least one filter element (70) is at least partially received in the installation chamber (72) of the function block, wherein the fluid-conveying channels (28, 42) are internally interconnected to one another inside the housing of the function block (12) such as to form a kind of matrix structure made up of transverse and longitudinal rows of fluid-conveying pipes with placeholders integrated in the function block (12) to install the respective valve components (32, 34, 36), **characterised in that** the filter device (46) is intended for the use of a plurality of filter elements (70), through which flow passes in both directions for filtration or backwashing such that the one set of filter elements (70) carry out filtration in one filtration position and at least one additional filter element (70) can be backwashed in a backwashing position to clean its active filter surface, such that the fluid-conveying channels (64, 68) forming the filter inlet and the filter outlet are integrated in the function block (12), such that the respective filter element (70) can be moved from its filtration position into the backwashing position and then back into the filtration position by means of a swivel device (76), and such that the swivel device (76) comprises a receiving portion (76) for receiving the filter elements (70) which is arranged such that it can be rotated around a pivot pin (80) inside the filter housing (56) by means of a drive (54).

2. Fluid system according to claim 1, **characterised in that** the filter housing (56) of the filter device (46) is placed on the function block (12) and receives approximately the upper half of the installation length of the respective filter element (70).

3. Fluid system according to either claim 1 or claim 2, **characterised in that** the drive (54) acts on the swivel pin (80) of the swivel device (76) by means of a freewheeling device (88), around which the individual filter elements (70) are coaxially arranged, and which is guided rotatably at its ends in the filter housing (56) and in the function block (12).

4. Fluid system according to claim 3, **characterised in that** the drive (54) with its drive housing is placed on the housing of the freewheeling device (88), which is in turn placed on the filter housing (56).

5. Fluid system according to any one of claims 1 to 4, **characterised in that** the respective filter element (70) is designed as a conical slotted screen tube filter element.

6. Fluid system according to any one of claims 1 to 5, **characterised in that**, in addition to valve components such as throttle valves (32, 34) and pressure-limiting valves (36), the function block (12) comprises pressure switches (30, 44) and at least one manometer (52).

7. Fluid system according to any one of claims 1 to 6, **characterised in that** the hydraulic pump, especially a high-pressure pump (18), can be connected to the function block (12) from the outside such as to convey fluids.

## Revendications

1. Système fluidique pour un circuit (10) de pompage, notamment un circuit de pompage hydraulique sous haute pression, comprenant un bloc (12) fonctionnel, dans l'enveloppe duquel s'étendent des voies (28, 42) fluidiques et auquel peuvent être raccordés, au moins en partie, des composants (32, 34, 46) de vanne, un dispositif (46) de filtration pouvant, par son enveloppe (56) de filtre, être relié au bloc (12) fonctionnel, de manière à ce qu'au moins un élément (70) de filtre soit reçu, au moins en partie, dans l'espace (72) de montage du bloc fonctionnel, dans lequel, à l'intérieur de l'enveloppe du bloc (12) fonctionnel, les voies (28, 42) fluidiques communiquent les unes avec les autres de manière interne de façon à créer une sorte de structure matricielle composée de rangées transversales et longitudinales de lignes fluidiques avec des dispositifs de maintien en place intégrés au bloc (12) fonctionnel pour le montage des composants (32, 34, 36) respectifs de vanne,
**caractérisé en ce que** le dispositif (46) de filtration est prévu pour l'utilisation de plusieurs éléments (7) de filtre, qui, pour une filtration ou un lavage en retour, peuvent être parcourus dans les deux sens, **en ce que** l'un des éléments (70) de filtre effectue la filtration dans une position de filtration et au moins un autre élément (70) de filtre, peut, pour le nettoyage de sa surface de filtre active, être lavé en retour dans une position de lavage en retour, **en ce que** les voies (64, 68) fluidiques formant l'entrée du filtre et la sortie du filtre sont intégrées dans le bloc (12) fonctionnel, **en ce qu'**au moyen d'un dispositif (76) de pivotement, l'élément (70) respectif de filtre peut passer de sa position de filtration à la position de lavage en retour et revenir à la position de filtration et **en ce que** le dispositif (76) de pivotement a une partie (78) de réception pour la réception des éléments (70) de filtre, qui, au moyen d'un entraînement (54), est montée tournant autour d'un axe (80) de pivotement à l'intérieur de l'enveloppe (56) de filtre.

2. Système fluidique suivant la revendication 1, **caractérisé en ce que** l'enveloppe (56) de filtre du dispositif (46) de filtration est posée sur le bloc (12) fonctionnel et reçoit à peu près la moitié supérieure de la longueur de montage de l'élément (70) respectif de filtre.

3. Système fluidique suivant la revendication 1 ou 2, **caractérisé en ce que** l'entraînement (54) agit au moyen d'un dispositif (88) à roue libre sur l'axe (80) de pivotement du dispositif (76) de pivotement pour disposer les éléments (70) individuels de filtre coaxialement et les guider en tournant du côté de l'extrémité dans l'enveloppe (56) de filtre et dans le bloc (12) fonctionnel.

4. Système fluidique suivant la revendication 3, **caractérisé en ce que** l'entraînement (54) est mis avec sa carcasse d'entraînement sur l'enveloppe du dispositif (88) à roue libre, laquelle est mise à son tour sur l'enveloppe (56) de filtre.

5. Système fluidique suivant l'une des revendications 1 à 4, **caractérisé en ce que** l'élément (70) respectif de filtre est constitué sous la forme d'un élément de filtre conique à tube de tamis à fente.

6. Système fluidique suivant l'une des revendications 1 à 5, **caractérisé en ce que** le bloc (12) fonctionnel a, outre des composants de vanne, comme des vannes (32, 34) à plusieurs voies et des vannes (36) de limitation de la pression, des interrupteurs (30, 44) manométrique, ainsi qu'au moins un manomètre (52).

7. Système fluidique suivant l'une des revendications 1 à 6, **caractérisé en ce que** la pompe hydraulique, notamment la pompe (18) à haute pression, peut être raccordée fluidiquement de l'extérieur au bloc (12) fonctionnel.
